# EUROPEAN PATENT SPECIFICATION

(11) **EP 2 474 507 B1**
(45) Date of publication and mention of the grant of the patent: **08.03.2017**
(21) Application number: 12150645.5
(22) Date of filing: 10.01.2012
(51) Int. Cl.: C03B 19/09, C03B 23/203, C03C 10/00, C03B 32/02

(54) **Crystallized glass article having patterns**
Kristallisierter Glasartikel mit Muster
Article en verre cristallisé ayant des motifs

(30) Priority: 11.01.2011 JP 2011003096
(43) Date of publication of application: 11.07.2012
(73) Proprietor: Jian Quan Glass Development Company Ltd., Jhubei City Hsin chu 302 (TW)
(72) Inventor: Hsu, Kuo-Chuan, Hsinchu City (TW)
(74) Representative: Ter Meer Steinmeister & Partner

(56) References cited:
- EP-A1- 1 760 050
- DE-C1- 4 125 698
- JP-A- 2009 023 866
- JP-A- 2009 173 526
- US-A- 4 783 429
- US-A- 5 061 307
- US-B1- 6 348 425

## Description

### BACKGROUND OF THE INVENTION

### A. Field of the Invention

The present invention relates to a glass article having spherical crystallized glass therein.

### B. Description of the Prior Art

Various crystallized glass articles having patterns have been proposed to be used as the exterior or interior materials for buildings, and the surface materials for furniture or office tables. For example, the following reference 1 has disclosed a crystallized glass article having patterns in which various patterns are formed by utilizing shapes or combinations of crystallizable glass plates. Furthermore, the following references 2 and 3 have disclosed a crystallized glass article having patterns without pinhole defects, produced by stacking crystallizable glass particles.

Reference 1: Japanese Patent Application No. 2007-91575
Reference 2: Japanese Patent Application No. 2009-23865
Reference 3: Japanese Patent Application No. 2009-23866

JP 2009-173526 A discloses a patterned crystallized glass article and a method of producing the same. In the patterned crystallized glass article, three glass layers are fused and integrated. The intermediate layer is composed of a crystallized glass layer, whereas the outer layers are composed of amorphous glass layers. The crystallized glass layer has a thickness of 1 to 10 mm.

2009-023866 A discloses another patterned crystallized glass article and a method of producing the same. Herein, a crystallized glass article comprises a crystallized glass matrix and a non-crystallized glass matrix in a center portion thereof. Within the non-crystallized portion cracks occur due to a low strength of the glass article. To overcome this, a glass layer is preferable not formed thicker than 6 mm to obtain a homogenously crystallized glass layer. At the end faces of the glass layer, another crystallized glass layer is welded that includes at least one type of crystals chosen from beta-wollastonite and diopside.

### SUMMARY OF THE INVENTION

### Problems to be Solved by the Invention

One object of the present invention is to provide a novel glass article having spherical crystallized glass therein, which differs from all of conventional crystallized glass articles having patterns. In other words, the present invention provides a glass article having spherical crystallized glass therein with a spotted appearance that stems from one or more spherical crystallized glass precipitated inside a crystallized glass layer.

### Means to Solve the Problems

This object is solved by the glass article having spherical crystallized gloss therein according to claim 1.

(1) A crystallized glass article having patterns includes:
   a crystallized glass layer A containing main crystals selected from at least one of β-wollastonite and diopside crystals, and having a thickness more than 6 mm and less than or equal to 18 mm, inside which one or more spherical crystallized glass is precipitated; and
   a glass layer B provided by fusion on at least a part of at least one face selected from one horizontal surface and lateral surfaces of the crystallized glass layer A.
(2) The crystallized glass article having patterns recited in the above item (1), wherein the crystallized glass layer A includes a translucent surface portion having crystals precipitating from the surface towards the inside thereof.
(3) The crystallized glass article having patterns recited in the above item (2), wherein the crystallized glass layer A includes an amorphous glass matrix extending from the surface portion in the direction of thickness.
(4) The crystallized glass article having patterns recited in any one of the above items (1)-(3), wherein the glass layer B is a crystallized glass layer.
(5) The crystallized glass article having patterns recited in any one of the above items (1)-(4), wherein the glass layer B is a crystallized glass layer produced by precipitating crystals in a condition that a plural of crystallizable glass particles are fusing together.

### Effect of the Invention

According to the present invention, a glass article having spherical crystallized glass therein outwardly expresses a spotted pattern through precipitating one or more spherical crystallized glass inside a glass layer is provided.

### BRIEF DESCRIPTION OF THE DRAWINGS

Fig. 1 is a schematic sectional view of the crystallized glass layer A of the crystallized glass article having patterns according to the present invention, illustrating the elements necessary for constituting it in the direction of thickness.
Fig. 2A is a plan view of one embodiment of the crystallized glass article having patterns according to the present invention, while Fig. 2B is a three-dimensional view of Fig. 2A.
Fig. 3C is a plan view of one embodiment of the crystallized glass article having patterns according to the present invention, while Fig. 3D is a plan view of another embodiment of the crystallized glass article having patterns according to the present invention.
Fig. 4E is a plan view of one embodiment of the crystallized glass article having patterns according to the present invention, while Fig. 4F is a three-dimensional view of Fig. 4E.
Figs. 5G, 5H, 5I and 5J are schematic sectional views illustrating a method of manufacturing one embodiment of the crystallized glass article having patterns according to the present invention.

### DETAILED DESCRIPTION OF THE PREFERRED EMBODIMENTS

Some embodiments necessary for practicing the present invention are described in details below, while the present invention is not limited to these embodiments, and various modifications may be made within the scopes of the appended claims. The symbol of "-" used herein indicates the range of value covering the lower limit and the upper limit put respectively leading and following "-"including those values of the upper, and lower limits.

The present invention is related to a crystallized glass article having patterns, including:
a crystallized glass layer A containing main crystals selected from at least one of β-wollastonite and diopside crystals, and having a thickness more than 6 mm and less than or equal to 18 mm, and one or more spherical crystallized glass precipitating inside the crystallized glass layer A; and
   a glass layer B provided in a manner of fusion-bonding on at least a part of at least one surface selected from one horizontal surface and lateral surfaces of the crystallized glass layer A.
In the present invention, the horizontal surface of the crystallized glass layer A signifies one surface viewed in the direction of thickness, while the lateral surface of the crystallized glass layer A signifies the face adjacent to the horizontal surface.

The crystallized glass layer A includes at least one main crystal selected from β-wollastonite (CaO·SiO₂) and diopside (CaO·MgO·2SiO₂) crystals. "Main crystal" referred herein represents the crystals with the highest content ratio among all crystals contained in the crystallized glass article.

The crystallized glass layer A is a layer produced by performing a crystallization thermal treatment on a crystallizable glass plate capable of precipitating at least one main crystal selected from β-wollastonite and diopside crystals, wherein the thermal treatment is performed at a temperature higher than the transition temperature. The crystallizable glass plate capable of precipitating at least one main crystal selected from β-wollastonite and diopside crystals is so called surface-crystallized crystallizable glass, wherein crystals precipitate from the surface towards the inside during the thermal treatment performed at a temperature higher than the transition temperature. Therefore, the crystallized glass layer A is a surface-crystallized type crystallized glass layer having crystals precipitating in the surface portion. In the crystallized glass layer A, the surface portion with at least one main crystal selected from β-wollastonite and diopside crystals precipitating therein is translucent. Moreover, "surface portion" referred herein covers the portion from the surface to about 1/3 of the thickness of the crystallized glass layer A, i.e. from the surface to about 2 mm - 6 mm in depth.

The surface portion of the crystallized glass layer A is translucent. Therefore, the shapes and colors of the spherical crystallized glass precipitating inside the crystallized glass layer A can be seen through the surface portion, thereby expressed on the surface, such as the surface that can be seen when the glass article is used as an exterior or interior material for a building or a surface material for an office table. Accordingly, the crystallized glass article having patterns according to the present invention can express a spotted pattern outwardly.

The crystallized glass layer A has a thickness more than 6 mm and less than or equal to 18 mm, and has one or more spherical crystallized glass precipitating inside the crystallized glass layer. When the thickness of the crystallized glass layer is 6mm or less than 6 mm, the space inside the crystallized glass layer is not sufficient to let the spherical crystallized glass fully grow. Therefore, the spherical crystallized glass cannot be formed successfully, so that it is difficult to obtain a crystallized glass layer outwardly expressing a spotted pattern. Accordingly, the thickness of the crystallized glass layer A is preferably more than 6 mm. On the other hand, when the thickness of the crystallized glass layer is more than 18 mm, the occupying ratio for the amorphous glass matrix remaining inside the crystallized glass layer becomes higher. Since cracks tend to occur in the glass matrix, the strength of the glass article would be too low to sustain practicality. Therefore, the thickness of the crystallized glass layer A is preferably less than or equal to 18 mm. In the present invention, in view of the precipitation of the spherical crystallized glass and the glass strength, the thickness of the crystallized glass layer A is preferably within a range of 8-18 mm, even preferably a range of 10-15 mm.

Inside the crystallized glass layer A, of the mechanism of forming the spherical crystallized glass is supposed as follows. The crystallized glass layer A is a layer formed by performing a crystallization thermal treatment on a surface-crystallized crystallizable glass plate. Before or during the surface-crystallized crystallizable glass plate is thermally treated, fine cracks tend to occur more inside than the surface portion in the glass matrix, and the fine cracks become boundary surfaces. The crystallized glass assumably grows from the boundary surfaces, thereby forming the spherical crystallized glass. The method used to make fine cracks occur more inside than the surface portion in the glass matrix of the crystallizable glass plate is not specifically limited. For example, the method could be applying a force on the crystallizable glass plate prior to or during the thermal treatment, or dramatically changing the temperature for the thermal treatment. The force applied on the crystallizable glass plate prior to the thermal treatment, in addition to the force applied by using a specific mechanism, can be a force applied on the crystallizable glass plate during the thermal treatment, cooling or conveying in the process of manufacturing.

The shape of the spherical crystallized glass is not limited to absolutely spherical, and also can be near spherical, or partial spherical (e.g. hemispherical). Preferably, the crystallized glass layer A has a surplus of amorphous glass matrix extending from the surface portion in the direction of thickness, wherein it is preferable to precipitate one or more spherical crystallized glass in the glass matrix.

The size of the spherical crystallized glass is not specifically limited. The size of the spherical crystallized glass precipitating inside the crystallized glass layer A changes according to the thickness. When the thickness of the crystallized glass layer A is thicker, the size of the spherical crystallized glass will be larger; and when the thickness of the crystallized glass layer A is thinner, the size of the spherical crystallized glass will be smaller. Since the spotted pattern expressed outside the crystallized glass article having patterns according to the present invention stems from the spherical crystallized glass precipitated inside the crystallized glass layer A, the size of the spherical crystallized glass can be adjusted by selecting the thickness of the crystallized glass layer A to adjust the size of the spotted pattern.

The crystallized glass article having patterns according to the present invention at least includes the crystallized glass layer A and the glass layer B. The glass layer B is a layer provided in a manner of fusion-bonding on at least a part of at least one surface selected from one horizontal surface and lateral surfaces of the crystallized glass layer A, to reinforce the strength of the crystallized glass layer A. The glass layer B may be provided in a manner of fusion-bonding on at least a part of one horizontal surface of the crystallized glass layer A, or may be provided in a manner of fusion-bonding on at least a part of a lateral surface of the crystallized glass layer A. Furthermore, the glass layer B may be provided in a manner of fusion-bonding on at least a part of one horizontal surface of the crystallized glass layer A and on at least a part of a lateral surface of the crystallized glass layer A. When the glass layer B is provided in a manner of fusion-bonding on one horizontal surface of the crystallized glass layer A, in view of the glass strength, it is preferable to provide the glass layer B in a manner of fusion-bonding on the entire horizontal surface of the crystallized glass layer A. When the glass layer B is provided in a manner of fusion-bonding on the lateral surfaces of the crystallized glass layer A, in view of the glass strength, it is preferable to provide the glass layer B in a manner of fusion-bonding around the full circumferential lateral surfaces of the crystallized glass layer A. Furthermore, if the shape of the glass article is nearly tetragon, in view of the glass strength, it is preferable to provide the glass layer B in a manner of fusion-bonding on two lateral surfaces of the crystallized glass layer A, wherein the two lateral surfaces are opposite to each other.

The glass layer B may be a crystallized glass layer or a non-crystallized glass layer, but preferably being a crystallized glass layer. When the glass layer B is a crystallized glass layer, the thermal expansion coefficients of the crystallized glass layer A and the glass layer B are similar, so the crystallized glass article according to the present invention is not prone to break. Likewise, the glass layer B and the crystallized glass layer A are preferably the crystallized glass having the same type of main crystals. When the glass layer B is a crystallized glass layer, in view of the glass strength, it is preferable that the glass layer B is crystallized to the central part.

The thickness of the glass layer B is not specifically limited, and can be selected adequately for its application. Preferably, the thickness is within a range of 6-20 mm, even preferably a range of 10-15 mm. Preferably, the glass layer B has a mechanical strength of 500 kg/cm² or above, measured by three-point bending test. The modulus of the difference between the thermal expansion coefficients of the crystallized glass layer A and that of the glass layer B at 30-380°C (hereinafter referred to as "the difference of thermal expansion coefficients") is preferably within a range of 0-10×10⁻⁷/°C, even preferably within a range of 0-3×10⁻⁷/°C. When the difference of thermal expansion coefficients is within a range of 0-10×10⁻⁷/°C, during the cooling step of the crystallization thermal treatment for manufacturing the crystallized glass article, the difference the amount of thermal contraction the crystallized glass layer A and the glass layer B (which fuse together) will not become over large, so the glass article has an advantage of not being prone to break. Additionally, for example, when the crystallized glass article having patterns according to the present invention is used as a surface material for a desk, the crystallized glass article is not prone to break even when a heat source of high temperature is placed near the surface material of the desk.

Preferably, the glass layer B is a crystallized glass layer produced by precipitating crystals in a condition that a plural of crystallizable glass particles fuse together. The crystallized glass layer formed by precipitating crystals in a condition that a plural of crystallizable glass particles fuse together usually expresses a marble pattern. When the glass layer B is provided in a manner of fusion-bonding on lateral surfaces of the crystallized glass layer A, since the glass layer B can express a marble pattern, the marble pattern can be provides in a part of the crystallized glass article having patterns of the present invention. Moreover, the crystallizable glass particles mean the particle-shaped crystallizable glass, which may be in the form of a sphere, a particle, a powder, a small piece, or a bar. The shapes of the glass particles are not specifically limited, and the sizes thereof are also not specifically limited, though the average particle size is preferably within a range of about 1-7 mm. For example, the crystallizable glass particles may be produced by the following methods: rapidly cooling molten glass by water cooling, or shattering bulk glass by a conventional mechanical shattering method.

The thickness of the crystallized glass article having patterns according to the present invention is not specifically limited, and may be adequately selected for its application or purpose of use. In view of practical aspects such as strength assurance, production effectiveness, and production costs, the proper thickness is more than 6 mm to 35 mm or less than 35mm, even preferably 8mm-30mm , and absolutely preferably 10mm-25mm.

One embodiment of the crystallized glass article having patterns according to the present invention is described below referring to the accompanying drawings. However, the present invention is not limited to this embodiment.

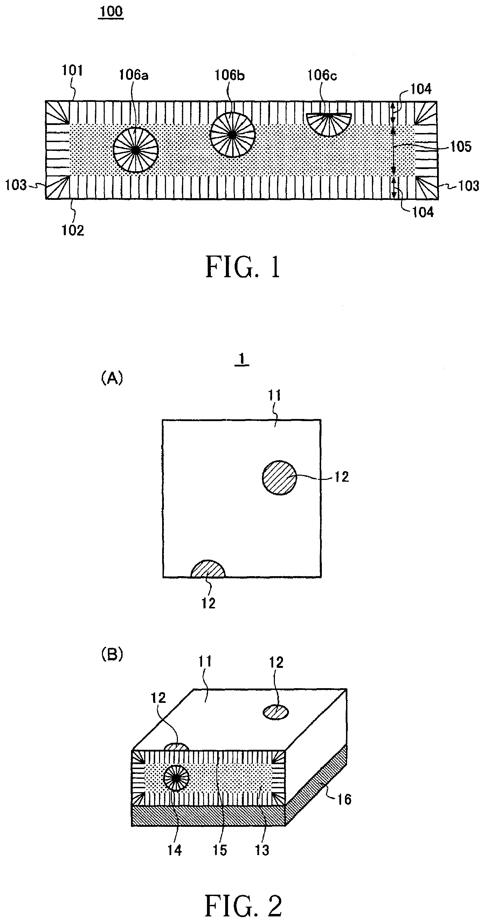

Fig. 1 is a schematic sectional view of the crystallized glass layer A of the crystallized glass article having patterns according to the present invention, illustrating elements necessary for constituting it in the direction of thickness. A front surface 101 is a surface that is visible when used as an exterior or interior material for a building or a surface material for furniture. A back surface 102 is a surface opposite to the front surface 101. A lateral surface 103 is a surface adjacent to the front surface 101 and the back surface 102. The glass layer B (not shown) is provided in a manner of fusion-bonding on at least one part of at least one surface selected from the back surface 102 and the lateral surface 103. A surface portion 104 covers the portion from the surface to about 1/3 of the thickness of the crystallized glass layer A in the direction of depth, precipitating at least one of β-wollastonite and diopside crystals as main crystals, and being translucent. A central portion in the direction of thickness 105 is the portion other than the surface portion 104, and includes an amorphous glass matrix. Spherical crystallized glass 106a has fully precipitated within the central portion in the direction of thickness 105. Spherical crystallized glass 106b has precipitated from the central portion in the direction of thickness 105 to the surface portion 104. Spherical crystallized glass 106c has precipitated from the central portion in the direction of thickness 105 to the surface portion 104, having a semispherical shape. The reason to have grown a semispherical shape is assumed that the spherical crystallized glass were formed in the central portion in the direction of thickness 105 due to fine cracks, particularly, in the place near the surface portion 104, and the spherical crystallized glass 106c was formed by using the fine crack as a boundary surface.

Fig. 2A is a plan view of one embodiment of the crystallized glass article having patterns according to the present invention, while Fig. 2B is a three- dimensional view of Fig. 2A. As to Fig. 2B, the proximal surface of the glass article is shown by a cross section cut along the direction of thickness. The crystallized glass article having patterns 1 shown in Figs. 2A and 2B includes a crystallized glass layer A 11 and a glass layer B 16 (the glass layer B 16 is not shown in Fig. 2A). The glass layer B 16 is provided in a manner of fusion-bonding on entire one horizontal surface of the crystallized glass layer A 11. A glass matrix 13 extends from a translucent surface portion 15 of the crystallized glass layer A 11 in the direction of thickness, and has precipitated spherical crystallized glass 14. Spotted patterns 12 are patterns expressed by the appearance of the shape and color of the spherical crystallized glass 14 through the translucent surface portion 15.

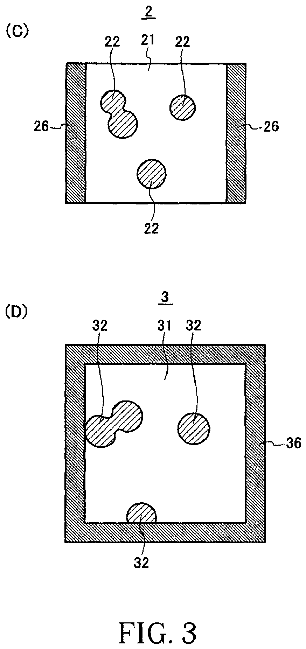

Fig. 3C is a plan view of one embodiment of the crystallized glass article having patterns according to the present invention. The crystallized glass article having patterns 2 shown in Fig. 3C includes a crystallized glass layer A 21 and a glass layer B 26. The glass layer B 26 is provided in a manner of fusion-bonding on two lateral surfaces of the crystallized glass layer A 21, wherein the two lateral surfaces are opposite to each other. Spotted patterns 22 are patterns expressed by the appearance of the shape and color of the spherical crystallized glass (not shown) precipitating inside the crystallized glass layer A 21 through the translucent surface portion.

Fig. 3D is a plan view of another embodiment of the crystallized glass article having patterns according to the present invention. The crystallized glass article having patterns 3 shown in Fig. 3D includes a crystallized glass layer A 31 and a glass layer B 36. The glass layer B 36 is provided in a manner of fusion-bonding around the full circumference of the lateral surfaces of the crystallized glass layer A 31. Spotted patterns 32 are patterns expressed by the appearance of the shape and color of the spherical crystallized glass (not shown) precipitating inside the crystallized glass layer A 31 through a translucent surface portion.

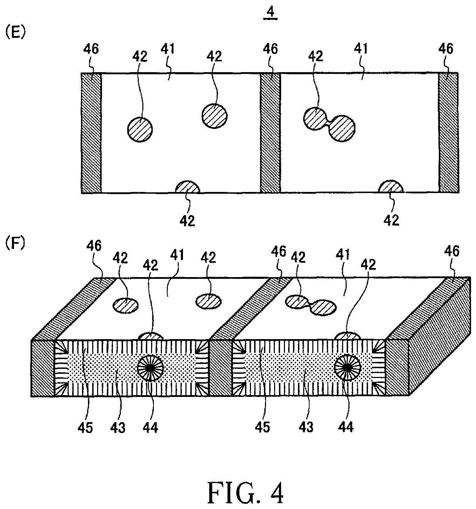

Fig. 4E is a plan view of one embodiment of the crystallized glass article having patterns according to the present invention, while Fig. 4F is a three- dimensional view of Fig. 4E. As to Fig. 4F, the proximal surface of the glass article is shown by the cross section cut along the direction of thickness. The crystallized glass article having patterns 4 shown in Figs. 4E and 4F includes two crystallized glass layers A 41 and three glass layers B 46. The two crystallized glass layers A 41 and the three glass layers B 46 are arranged alternately in a manner of fusion-bonding each other. Glass matrixes 43 extend from translucent surface portions 45 of the crystallized glass layers A 41 in the direction of thickness, and have precipitated spherical crystallized glass 44. Spotted patterns 42 are patterns expressed by the appearance of the shape and color of the spherical crystallized glass 44 through the translucent surface portions 45.

The preferable composition of the crystallized glass layer A and the preferable composition of the glass layer B as being a crystallized glass layer are described as follows.
(1) Crystallized glass may be formed by using a main component comprising SiO₂ 50-65%, Al₂O₃ 3-13%, CaO 15-25%, and ZnO 2-10%, by weight percent, adding at least one type of dyeing oxidants at an effective amount of 5% or below, and precipitating β-wollastonite as the main crystal.
(2) Crystallized glass may be formed by using a main component comprising SiO₂ 45-75%, Al₂O₃ 1-13%, CaO 6-14.5%, Na₂O+K₂O 1-13%, and BaO+ZnO 4-24% (BaO 0-20%, ZnO 0-18%), by weight percent, adding at least one type of dyeing oxidants at an effective amount of 10% or below, and precipitating β-wollastonite as the main crystal.
(3) Crystallized glass may be formed by using a main component comprising SiO₂ 45-75%, Al₂O₃ 1-15%, CaO 8-20%, Na₂O+K₂O 1-15%, BaO+ZnO 4-25% (BaO 0-18%, ZnO 0-18%), Fe₂O₃ 2-8%, TiO₂ 0.1-7%, MnO₂ 0.1-5%, CoO 0-2%, B₂O₃ 0-3%, As₂O₃ 0-1%, and Sb₂O₃ 0-1%, by weight percent, and precipitating β-wollastonite as the main crystal.
(4) Crystallized glass may be formed by using a main component comprising SiO₂ 48-68%, Al₂O₃ 0.5-17%, CaO 6-22%, Na₂O+K₂O 5-22%, MgO 0.2-8%, BaO+ZnO<15% (BaO 0-8%, ZnO 0-9%), B₂O₃ 0-6%,and at least one type of dyeing oxidants with a total amount of 0-10%, by weight percent, and precipitating β-wollastonite as the main crystal.
(5) Crystallized glass may be formed by using a main component comprising SiO₂ 40-75%, Al₂O₃ 2-15%, CaO 3-15%, ZnO 0-15%, BaO 0-20%, B₂O₃ 0-10%, and Na₂O+K₂O+Li₂O 2-20%, at least one type of dyeing oxidants with a total amount of 0-10%, As₂O₃ 0-1%,and Sb₂O₃ 0-1%, by weight percent, and precipitating β-wollastonite as the main crystal.
(6) Crystallized glass may be formed by using a main component comprising SiO₂ 45-75%, Al₂O₃ 1-25%, CaO+MgO 1.5-13% (CaO 1-12.5%, MgO 0.5-12%), BaO 0-18%, ZnO 0-18%, Na₂O 1-15%, K₂O 0-7%, Li₂O 0-5%, B₂O₃ 0-10%, P₂O₅ 0-10%, at least one type of dyeing oxidants with a total amount of 0-10%, As₂O₃ 0-1%,and Sb₂O₃ 0-1%, by weight percent, and precipitating diopside as the main crystal.
(7) Crystallized glass may be formed by using a main component comprising SiO₂ 40-75%, Al₂O₃ 2-15%, CaO 3-20%, ZnO 0-15%, BaO 0-20%, B₂O₃ 0-10%, Na₂O+K₂O+Li₂O 2-20%, at least one type of dyeing oxidants with a total amount of 0-10%, As₂O₃ 0-1%, Sb₂O₃ 0-1%, by weight percent, and precipitating β-wollastonite as the main crystal.
(8) Crystallized glass may be formed by using a main component comprising SiO₂ 45-75%, Al₂O₃ 1-25%, CaO 1-20%, MgO 0.5-17%, BaO 0-18%, ZnO 0-18%, Na₂O 1-15%, K₂O 0-7%, Li₂O 0-5%, B₂O₃ 0-10%, P₂O₅ 0-10%, at least one type of dyeing oxidants with a total amount of 0-10%, As₂O₃ 0-1%, Sb₂O₃ 0-1%, by weight percent, and precipitating diopside as the main crystal.
(9) Crystallized glass may be formed by using a main component comprising SiO₂ 45-70%, Al₂O₃ 1-13%, CaO 6-25%, Na₂O+ K₂O+Li₂O 0.1-20%, BaO+ZnO 4-24% (BaO 0-20%, ZnO 0-18%), each of dyeing oxidants (V₂O₅, Cr₂O₃, MnO₂, Fe₂O₃, CoO, NiO, CuO etc.,) 0-10%, by weight percent, and precipitating β-wollastonite as the main crystal.
(10) Crystallized glass may be formed by using a main component comprising SiO₂ 45-75%, Al₂O₃ 1-25%, CaO 1-20%, MgO 0.5-17%, BaO 0-18%, ZnO 0-18%, Na₂O 1-15%, K₂O 0-7%, Li₂O 0-5%, B₂O₃ 0-10%, P₂O₅ 0-10%, As₂O₃ 0-1%, Sb₂O₃ 0-1%, at least one type of dyeing oxidants with a total amount of 0-10%, by weight percent, and precipitating diopside as the main crystal.
(11) Crystallized glass may be formed by using a main component comprising SiO₂ 45-75%, Al₂O₃ 1-15%, CaO 6-20%, Na₂O+ K₂O 1-15%, BaO+ZnO 4-25% (BaO 0-18%, ZnO 0-18%), NiO 0.05-5%, CoO 0.01-5%, by weight percent, and precipitating β-wollastonite as the main crystal.
(12) Crystallized glass may be formed by using a main component comprising SiO₂ 50-75%, Al₂O₃ 1-15%, CaO+Li₂O+ B₂O₃ 10-17.5% (CaO 6-16.5%, Li₂O 0.1-5%, B₂O₃ 0-1.5%), ZnO 2.5-12%, BaO 0-12%, Na₂O+ K₂O 0.1-15%, As₂O₃ 0-1%, Sb₂O₃ 0-1%, MgO 0-1.5%, SrO 0-1.5%, TiO₂ 0-1%, ZrO₂ 0-1%, P₂O₅ 0-1%, and at least one type of dyeing oxidants (at least one of V₂O₅, Cr₂O₃, MnO₂, Fe₂O₃, CoO, NiO, and CuO) with a total amount of 0-10%, by weight percent, and precipitating β-wollastonite as the main crystal.
(13) Crystallized glass may be formed by using a main component comprising SiO₂ 45-77%, Al₂O₃ 1-25%, CaO 2-25%, ZnO 0-18%, BaO 0-20%, MgO 0-17%, Na₂O 1-15%, K₂O 0-7%, Li₂O 0-5%, B₂O₃ 0-1.5%, at least one type of dyeing oxidants (such as V₂O₅, Cr₂O₃, MnO₂, Fe₂O₃, CoO, NiO, and CuO) with a total amount of 0-10%, As₂O₃ 0-1%, Sb₂O₃ 0-1%, SrO 0-1.5%, TiO₂ 0-1%, ZrO₂ 0-1%,and P₂O₅ 0-1%, by weight percent, and precipitating β-wollastonite as the main crystal.

Method of manufacturing crystallized glass article having patterns
The crystallized glass article having patterns according to the present invention can be produced by the following method. However, the present invention is not limited to the method below.

The crystallized glass article having patterns of the present invention is produced by respectively preparing a crystallizable glass plate to form the crystallized glass layer A and a glass plate or glass particles to form the glass layer B, and applying a thermal treatment when the later glass plate or glass particles contact at least one part of at least one of one horizontal surface and lateral surfaces of the former crystallizable glass, so as to fuse these glass materials together and then crystallize. In view of practicability or production cost, a preferable embodiment of the present invention may follow the manufacturing method described below.

One embodiment of a manufacturing method of the crystallized glass article having patterns according to the present invention is described below referring to the accompanying drawings. However, the manufacturing method according to the present invention is not limited to this embodiment.

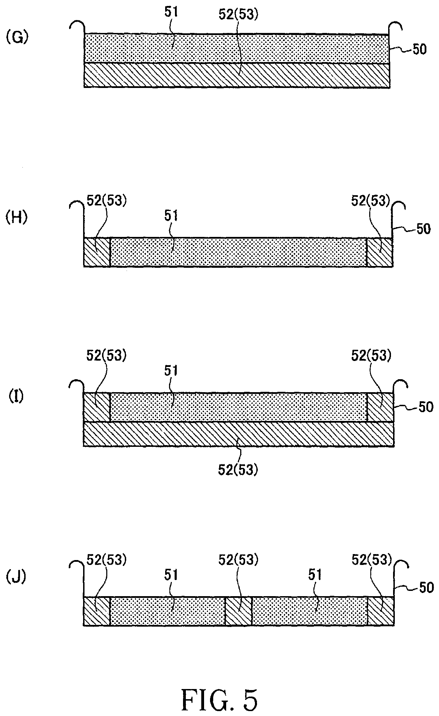

Figs. 5G-5J are schematic sectional views of one embodiment of the manufacturing method of the crystallized glass article having patterns according to the present invention. Specifically, the drawings demonstrate the status of placing glass materials inside a fireproof frame. In Figs. 5G-5J, a crystallizable glass plate 51 to form the crystallized glass layer A and a glass plate 52 or glass particles 53 to form the glass layer B are placed inside a fireproof frame 50 which is coated with demolding agents on the lateral and bottom surfaces thereof. The glass plate 52 is not limited to one piece of glass plate. For example, two or more than two glass plates may be stacked, or two or more than two glass rods may be lined up without space in-between. As to the glass particles 53, a plural of glass particles 53 are placed stacking.

In the embodiment shown in Fig. 5G, one piece of glass plate 52 is placed, or a plural of glass particles 53 are placed stacking, on the bottom of the fireproof frame 50. One piece of the crystallizable glass plate 51 is placed on the glass plate 52 or the glass particles 53.

In the embodiment shown in Fig. 5H, one piece of crystallizable glass plate 51, which is smaller than the fireproof frame 50, is placed on the bottom of the fireproof frame 50, so as to form a space between the crystallizable glass plate 51 and the sidewall of the fireproof frame 50. The glass plate 52 is placed, or the glass particles 53 are placed stacking so as to be held by being inserted in between the crystallizable glass plate 51 and the sidewall of the fireproof frame 50.

In the embodiment shown in Fig. 5I, one piece of glass plate 52 is placed, or a plural of glass particles 53 are placed stacking, on the bottom of the fireproof frame 50. One piece of crystallizable glass plate 51, which is smaller than the fireproof frame 50, is placed on the glass plate 52 or the glass particles 53, so as to form a space between the crystallizable glass plate 51 and the sidewall of the fireproof frame 50. Furthermore, the glass plate 52 is placed, or the glass particles 53 are placed stacking so as to be held by being inserted in between the crystallizable glass plate 51 and the sidewall of the fireproof frame 50.

In the embodiment shown in Fig. 5J, two pieces of crystallizable glass plate 51 are placed on the bottom of the fireproof frame 50, so as to form spaces between the two crystallizable glass plates 51 and the sidewall of the fireproof frame 50, and a space between the two crystallizable glass plates 51. The glass plate 52 is placed, or the glass particles 53 are placed stacking so as to be held by being inserted in between the crystallizable glass plate 51 and the sidewall of the fireproof frame 50. Moreover, the glass plate 52 is placed, or the glass particles 53 are placed stacking so as to be held by being inserted in between the two crystallizable glass plates 51.

Next, a thermal treatment is applied on the glass materials shown in Figs. 5G-5J. The thermal treatment is conducted at a temperature higher than the transition temperatures of all the materials in order to fuse the glass materials together. In addition, the thermal treatment is conducted so as to crystallize the crystallizable glass plate to form the crystallized glass layer A, and precipitate at least one of β-wollastonite and diopside as the main crystals in the crystallizable glass plate. The specific temperature and time for the thermal treatment may be adequately selected based on the transition temperatures of glass materials or the thicknesses of glass plates. Typically, after the temperature is raised at a rate of 60-600°C/hour from room temperature, it is preferably retained within a range of 1030-1130°C, absolutely preferably within a range of 1050-1100°C. Additionally, it is preferable to conduct the slow-cooling step after the thermal treatment is conducted for about 0.5-5 hours.

For the crystallized glass article obtained from the aforesaid thermal treatment, a grinding step of grinding the glass surface or a cutting step of cutting the crystallized glass article may be conducted so as to make the glass article into a predetermined size or shape, if there is a need to adjust the thickness of the crystallized glass article or finish the glass surface finely.

The crystallized glass article of the present invention is, for example, suitable to be used as an exterior or interior material for a building, and a surface material for furniture. Embodiments

The following embodiments are provided to further clarify the present invention, but not to limit the scopes of the present invention.

### Example 1

A raw glass material comprising SiO₂ 65.1%, Al₂O₃ 6.6%, CaO 12.0%, ZnO 6.6%, BaO 4.1%, Na₂O 3.3%, and K₂O 2.3%, by mass percent, was melted at 1500°C for 16 hours. Next, the molten glass was shaped into a glass plate by the Rollout method, to give a crystallizable glass plate a1 having a thickness of 7 mm.

A raw glass material comprising SiO₂ 64.9%, Al₂O₃ 6.6%, CaO 12.0%, ZnO 6.6%, BaO 4.1%, Na₂O 3.3%, K₂O 2.3%, and NiO 0.2%, by mass percent, was melted at 1500°C for 16 hours. Next, the molten glass was water-granulated, dried, and then classified to give crystallizable glass particles b1 having a particle size of 1-7 mm.

The crystallizable glass plate a1 (80 mm×80 mm) shaped into a square was placed on the bottom of the fireproof frame (100 mm×100 mm) coated with demolding agents, so as to form a space between the crystallizable glass plate a1 and the sidewall of the fireproof frame. The crystallizable glass particles b1 stacked to have a thickness of 8-10 mm were placed so as to be held by being inserted in between the crystallizable glass plate a1 and the sidewall of the fireproof frame. Next, the crystallizable glass plate a1 and the crystallizable glass particles b1 were softened and fused together and then precipitated crystals by raising the temperature at a rate of 180 °C/hour retaining the temperature at 1100°C for one hour.

As described above, the obtained crystallized glass article included the crystallized glass layer A formed from the crystallizable glass plate a1, and the crystallized glass layer B formed from the crystallizable glass particles b1 placed around the full circumference of lateral surfaces of the crystallized glass layer A in a manner of fusion-bonding. In the crystallized glass article sized 7 mm in total thickness (the thickness of the crystallized glass layer A), a white crystallized glass was embedded inside the beige frame sized 10 mm in width.

According to the results from the x-ray diffraction test, β-wollastonite precipitated as the main crystal in the crystallized glass layer A as well as in the crystallized glass layer B. The crystallized glass article expressed a spotted pattern on the surface of the crystallized glass layer A. When cutting the crystallized glass article and examining the cross-section thereof, it can be found that in the crystallized glass layer A, there were crystals precipitating from the surface towards the inside, and a glass matrix extended from the surface portion in the direction of thickness, wherein the spherical crystallized glass precipitated in the glass matrix.

### Example 2

A raw glass material comprising SiO₂ 64.9%, Al₂O₃ 6.6%, CaO 12.0%, ZnO 6.6%, BaO 4.1%, Na₂O 3.3%, K₂O 2.3%, and NiO 0.2%, by mass percent, was melted at 1500°C for 16 hours. Next, the molten glass was shaped into a glass plate by the Roll-out method, to give a crystallizable glass plate a2 having a thickness of 12 mm.

A raw glass material comprising SiO₂ 62.0%, Al₂O₃ 9.0%, MgO 4.5%, CaO 9.0%, BaO 4.6%, B₂O₃ 0.5%, P₂O₅ 2.0%, Sb₂O₃ 0.35%, Na₂O 5.0%, K₂O 3.0%, and CoO 0.05%, by mass percent, was melted at 1500°C for 16 hours. Next, the molten glass was water-granulated, dried, and then classified to give crystallizable glass particles b2 having a particle size of 3-7 mm.

The crystallizable glass plate a2 (120 mm×120 mm) shaped into a square was placed on the bottom of the fireproof frame (150 mm×150 mm) coated with demolding agents, so as to form a space between the crystallizable glass plate a2 and the sidewall of the fireproof frame. The crystallizable glass particles b2 stacked to have a thickness of 13-15 mm were placed so as to be held by being inserted in between the crystallizable glass plate a2 and the sidewall of the fireproof frame. Next, the crystallizable glass plate a2 and the crystallizable glass particles b2 were softened and fused together and then precipitated crystals by raising the temperature at a rate of 120°C /hour and retaining the temperature at 1080°C for 1.5 hours.

As described above, the obtained crystallized glass article included the crystallized glass layer A formed from the crystallizable glass plate a2, and the crystallized glass layer B formed from the crystallizable glass particles b2 placed around the full circumference of lateral surfaces of the crystallized glass layer A in a manner of fusion-bonding. In the crystallized glass article sized 12 mm in total thickness (the thickness of the crystallized glass layer A), a beige crystallized glass was embedded inside the gray frame sized 15 mm in width.

According to the results from the x-ray diffraction test, β-wollastonite precipitated as the main crystal in the crystallized glass layer A, and diopside precipitated as the main crystal in the crystallized glass layer B. The crystallized glass article expressed a spotted pattern on the surface of the crystallized glass layer A. When cutting the crystallized glass article and examining the cross-section thereof, it can be found that in the crystallized glass layer A, there were crystals precipitating from the surface towards the inside, and a glass matrix extended from the surface portion in the direction of thickness, wherein the spherical crystallized glass precipitated in the glass matrix.

### Example 3

A raw glass material comprising SiO₂ 62.0%, Al₂O₃ 9.0%, MgO 4.5%, CaO 9.0%, BaO 4.6%, B₂O₃ 0.5%, P₂O₅ 2.0%, Sb₂O₃ 0.35%, Na₂O 5.0%, K₂O 3.0%, and CoO 0.05%, by mass percent, was melted at 1500°C for 16 hours. Next, the molten glass was shaped into a glass plate by the Roll-out Method, to give a crystallizable glass plate a3 having a thickness of 18 mm.

A raw glass material comprising SiO₂ 62.2%, Al₂O₃ 5.9%, CaO 12.9%, ZnO 5.2%, BaO 6.0%, Na₂O 4.6%, K₂O 2.1%, Li₂O 1.0%, and NiO 0.1%, by mass percent, was melted at 1450°C for 16 hours. Next, the molten glass was water-granulated, dried, and then classified to give crystallizable glass particles b3 having a particle size of 1-7 mm.

The crystallizable glass plate a3 (160 mm×160 mm) shaped into a square was placed on the bottom of the fireproof frame (200 mm×200 mm) coated with demolding agents, so as to form a space between the crystallizable glass plate a3 and the sidewall of the fireproof frame. The crystallizable glass particles b3 stacked to have a thickness of 19-21 mm were placed so as to be held by being inserted in between the crystallizable glass plate a3 and the sidewall of the fireproof frame. Next, the crystallizable glass plate a3 and the crystallizable glass particles b3 were softened and fused together and then precipitated crystals by raising the temperature at a rate of 120°C /hour and retaining the temperature at 1080°C for 1.5 hours.

As described above, the obtained crystallized glass article included the crystallized glass layer A formed from the crystallizable glass plate a3, and the crystallized glass layer B formed from the crystallizable glass particles b3 placed around the full circumference of lateral surfaces of the crystallized glass layer A in a manner of fusion-bonding. In the crystallized glass article sized 18 mm in total thickness (the thickness of the crystallized glass layer A), a gray crystallized glass was embedded inside the beige frame sized 20 mm in width.

According to the results from the x-ray diffraction test, diopside precipitated as the main crystal in the crystallized glass layer A, and β-wollastonite precipitated as the main crystal in the crystallized glass layer B. The crystallized glass article expressed a spotted pattern on the surface of the crystallized glass layer A. When cutting the crystallized glass article and examining the cross-section thereof, it can be found that in the crystallized glass layer A, there were crystals precipitating from the surface towards the inside, and a glass matrix extended from the surface portion in the direction of thickness, wherein the spherical crystallized glass precipitated in the glass matrix.

### Example 4-1

A raw glass material comprising SiO₂ 62.2%, Al₂O₃ 5.9%, CaO 12.9%, ZnO 5.2%, BaO 6.0%, Na₂O 4.6%, K₂O 2.1%, Li₂O 1.0%, and NiO 0.1%, by mass percent, was melted at 1450°C for 16 hours. Next, the molten glass was shaped into a glass plate by the Roll-out Method, to give a crystallizable glass plate a4 having a thickness of 10 mm.

A raw glass material comprising SiO₂ 62.3%, Al₂O₃ 5.9%, CaO 12.9%, ZnO 5.2%, BaO 6.0%, Na₂O 4.6%, K₂O 2.1%, and Li₂O 1.0%, by mass percent, was melted at 1450°C for 16 hours. Next, the molten glass was water-granulated, dried, and then classified to give crystallizable glass particles b4 having a particle size of 1-7 mm.

The crystallizable glass particles b4 were stacked on the entire bottom of the fireproof frame (100 mm×100 mm) coated with demolding agents, to give a thickness of 7-10 mm. The square crystallizable glass plate a4 (100 mm×100 mm) was placed on the stacked crystallizable glass particles b4. Next, the crystallizable glass plate a4 and the crystallizable glass particles b4 were softened and fused together and then precipitate crystals by raising the temperature at a rate of 180°C /hour and retaining the temperature at 1080°C for 1 hour.

As described above, the obtained crystallized glass article included the crystallized glass layer A formed from the crystallizable glass plate a4, and the crystallized glass layer B formed from the crystallizable glass particles b4 placed on the entire one horizontal surface of the crystallized glass layer A in a manner of fusion-bonding. The crystallizable glass article had a total thickness of about 16 mm (the thickness of the crystallized glass layer A was 10 mm, and the thickness of the crystallized glass layer B was about 6 mm), and had a front face of a beige color.

According to the results from the x-ray diffraction test, β-wollastonite precipitated as the main crystal in the crystallized glass layer A, as well as in the crystallized glass layer B. The crystallized glass article expressed a spotted pattern on the surface of the crystallized glass layer A. When cutting the crystallized glass article and examining the cross-section thereof, it can be found that in the crystallized glass layer A, there were crystals precipitating from the surface towards the inside, and a glass matrix extended from the surface portion in the direction of thickness, wherein the spherical crystallized glass precipitated in the glass matrix.

### Example 4-2

The crystallizable glass plate a4 having a thickness of 10 mm was prepared according to the method recited in example 4-1.

A raw glass material comprising SiO₂ 62.3%, Al₂O₃ 5.9%, CaO 12.9%, ZnO 5.2%, BaO 6.0%, Na₂O 4.6%, K₂O 2.1%, and Li₂O 1.0%, by mass percent, was melted at 1450°C for 16 hours. Next, the molten glass was shaped into a glass plate by the Roll-out Method, to give a crystallizable glass plate b4 having a thickness of 6 mm.

The crystallizable glass plate b4 (100 mm×100 mm) shaped into a square was placed on the bottom of the fireproof frame (100 mm×100 mm) coated with demolding agents. The square crystallizable glass plate a4 (100 mm×100 mm) was placed on the crystallizable glass plate b4. Next, the crystallizable glass plate a4 and the crystallizable glass plate b4 were softened and fused together and then precipitated crystals by raising the temperature at a rate of 180 °C/hour and retaining the temperature at 1080°C for 1 hour.

As described above, the obtained crystallized glass article included the crystallized glass layer A formed from the crystallizable glass plate a4, and the crystallized glass layer B formed from the crystallizable glass plate b4 placed on the one entire horizontal surface of the crystallized glass layer A in a manner of fusion-bonding. The crystallizable glass article had a total thickness of 16 mm (the thickness of the crystallized glass layer A was 10 mm, and the thickness of the crystallized glass layer B was 6 mm), and had the front of beige color.

According to the results from the x-ray diffraction test, β-wollastonite precipitated as the main crystal in the crystallized glass layer A, as well as in the crystallized glass layer B. The crystallized glass article expressed a spotted pattern on the surface of the crystallized glass layer A. When cutting the crystallized glass article and examining the cross-section thereof, it can be found that in the crystallized glass layer A, there were crystals precipitating from the surface towards the inside, and a glass matrix extended from the surface portion in the direction of thickness, wherein the spherical crystallized glass precipitated in the glass matrix.

### Comparative example 1

A crystallizable glass plate a11 having a thickness of 6 mm was produced according to the method recited in example 1 to produce the crystallizable glass plate a1 having a thickness of 7 mm, yet modifying the thickness during the output of the Roll-out Method. Furthermore, the crystallizable glass particles b1 were prepared according to the method recited in example 1.

The crystallizable glass plate a11 (80 mm×80 mm) shaped into a square was placed on the bottom of the fireproof frame (100 mm×100 mm) coated with demolding agents, so as to form a space between the crystallizable glass plate a11 and the sidewall of the fireproof frame. The crystallizable glass particles b1 stacked to have a thickness of 7-9 mm were placed so as to be held by being inserted in between the crystallizable glass plate a11 and the sidewall of the fireproof frame. Next, the crystallizable glass plate a11 and the crystallizable glass particles b1 were softened and fused together and then precipitated crystals by raising the temperature at a rate of 180°C /hour and retaining the temperature at 1100°C for 1 hour.

As described above, the obtained crystallized glass article included the crystallized glass layer A formed from the crystallizable glass plate a11, and the crystallized glass layer B formed from the crystallizable glass particles b1 placed around the full circumference of lateral surfaces of the crystallized glass layer A in a manner of fusion-bonding. In the crystallized glass article sized 6 mm in total thickness (the thickness of the crystallized glass layer A), a white crystallized glass was embedded inside the beige frame sized 10 mm in width.

According to the results from the x-ray diffraction test, β-wollastonite precipitated as the main crystal in the crystallized glass layer A, as well as in the crystallized glass layer B. The crystallized glass article did not express a spotted pattern on the surface of the crystallized glass layer A. When cutting the crystallized glass article and examining the cross-section thereof, it can be found that in the crystallized glass layer A, there were crystals precipitating from the surface towards the inside, but no glass matrix was remained, wherein no spherical crystallized glass precipitated.

### Comparative example 2

A crystallizable glass plate a12 having a thickness of 19 mm was produced according to the method recited in example 3 to produce the crystallizable glass plate a3 having a thickness of 18 mm, yet modifying the thickness during the output of the Roll-out Method. Furthermore, the crystallizable glass particles b3 were prepared according to the method recited in example 3.

The crystallizable glass plate a12 (160 mm×160 mm) shaped into a square was placed on the bottom of the fireproof frame (200 mm×200 mm) coated with demolding agents, so as to form a space between the crystallizable glass plate a12 and the sidewall of the fireproof frame. The crystallizable glass particles b3 stacked to have a thickness of 20-22 mm were placed so as to be held by being inserted in between the crystallizable glass plate a12 and the sidewall of the fireproof frame. Next, the crystallizable glass plate a12 and the crystallizable glass particles b3 were softened and fused together and then precipitated crystals by raising the temperature at a rate of 120°C /hour and retaining the temperature at 1080°C for 1.5 hours.

As described above, the obtained crystallized glass article included the crystallized glass layer A formed from the crystallizable glass plate a12, and the crystallized glass layer B formed from the crystallizable glass particles b3 placed around the full circumference of lateral surfaces of the crystallized glass layer A in a manner of fusion-bonding. In the crystallized glass article sized 19 mm in total thickness (the thickness of the crystallized glass layer A), a gray crystallized glass was embedded inside the beige sized 20 mm in width.

According to the results from the x-ray diffraction test, diopside precipitated as the main crystal in the crystallized glass layer A, while β-wollastonite precipitated as the main crystal in the crystallized glass layer B. The crystallized glass article expressed a spotted pattern on the surface of the crystallized glass layer A. When cutting the crystallized glass article and examining the cross-section thereof, it can be found that in the crystallized glass layer A, there were crystals precipitating from the surface towards the inside, and a glass matrix extended from the surface portion in the direction of thickness, wherein the spherical crystallized glass precipitated in the glass matrix. However, in the crystallized glass layer A, the portion occupied by the glass matrix was too large, and there were cracks in the glass matrix, so the strength of the glass article was too low. Thereby, the glass article was not suitable for practical use.

## Claims

1. A glass article having spherical crystallized glass therein, comprising:
- a glass layer A (11) containing at least one main crystal selected from *β-*wollastonite and diopside crystals, the glass layer A (11) having a thickness more than 6 mm and less than or equal to 18 mm; and
- a glass layer B (16) provided in a manner of being fusion-bonded on at least a part of at
least one surface selected from one horizontal surface and lateral surfaces of the glass layer A (11),
- wherein the glass layer A (11) includes a translucent surface portion (15) and a central portion in the direction of the thickness, the translucent surface portion (15) includes the at least one main crystal precipitating from the surface towards the inside thereof, the central portion includes an amorphous glass matrix (13) within which one or more spherical crystallized glasses (14) have been precipitated and spotted patterns are expressed by appearance
of shapes and colors of the one or more spherical crystallized glasses (14) through the translucent surface portion (15).

2. The glass article claim 1, wherein the glass layer B (16) is a crystallized glass layer.

3. The glass article of claim 1 or 2, wherein the glass layer B (16) is a crystallized glass layer produced by precipitating crystals in a condition that a plural of crystallizable glass particles fuse together.

## Patentansprüche

1. Glasartikel, in dem kugelförmiges kristallisiertes Glas vorhanden ist und der Folgendes umfasst:
- eine Glasschicht A (11), die mindestens einen Hauptkristall enthält, der aus β-Wollastonit- und Diopsid-Kristallen ausgewählt ist, wobei die Glasschicht A (11) eine Dicke besitzt, die größer als 6 mm und kleiner als oder gleich 18 mm ist; und
- eine Glasschicht B (16), die in einer Weise vorgesehen ist, dass sie zumindest mit einem Teil mindestens einer Fläche, die aus einer horizontalen Fläche und seitlichen Flächen der Glasschicht A (11) ausgewählt ist, durch ein Fusionsverfahren verbunden ist,
- wobei die Glasschicht A (11) einen lichtdurchlässigen Flächenabschnitt (15) und einen mittleren Abschnitt in Richtung der Dicke enthält, wobei der lichtdurchlässige Flächenabschnitt (15) den mindestens einen Hauptkristall enthält, der von der Oberfläche nach innen abgeschieden ist, wobei der mittlere Abschnitt einen amorphen Glasgrundstoff (13) enthält, innerhalb dessen ein oder mehrere kugelförmige kristallisierte Gläser (14) abgeschieden sind, und Fleckenmuster durch das Erscheinen von Formen und Farben des einen oder der mehreren kugelförmigen kristallisierten Gläser (14) durch den lichtdurchlässigen Flächenabschnitt (15) ausgedrückt werden.

2. Glasartikel nach Anspruch 1, wobei die Glasschicht B (16) eine kristallisierte Glasschicht ist.

3. Glasartikel nach Anspruch 1 oder 2, wobei die Glasschicht B (16) eine kristallisierte Glasschicht ist, die durch Abscheiden von Kristallen in einem Zustand, in dem mehrere kristallisierbare Glasteilchen miteinander verschmelzen, erzeugt wird.

## Revendications

1. Article en verre possédant un verre cristallisé sphérique dans celui-ci, comprenant :
- une couche de verre A (11) contenant au moins un cristal principal choisi depuis la β-wollastonite et des cristaux diopsides, la couche de verre A (11) possédant une épaisseur supérieure à 6 mm et inférieure ou égale à 18 mm ; et
- une couche de verre B (16) fournie d'une manière telle qu'elle est appliquée par fusion sur au moins une partie d'au moins une surface choisie parmi une surface horizontale et des surfaces latérales de la couche de verre A (11),
- dans lequel la couche de verre A (11) inclut une partie de surface translucide (15) et une partie centrale dans la direction de l'épaisseur, la partie de surface translucide (15) inclut l'au moins un cristal principal précipitant à partir de la surface en direction de l'intérieur de celle-ci, la partie centrale inclut une matrice de verre amorphe (13) à l'intérieur de laquelle un ou plusieurs verres cristallisés sphériques (14) ont été précipités et des motifs mouchetés sont exprimés sous l'apparence de formes et de couleurs de l'un ou de plusieurs verres cristallisés sphériques (14) à travers la partie de surface translucide (15).

2. Article en verre selon la revendication 1, dans lequel la couche de verre B (16) est une couche de verre cristallisé.

3. Article en verre selon la revendication 1 ou la revendication 2, dans lequel la couche de verre B (16) est une couche de verre cristallisé produite en précipitant des cristaux dans une condition telle qu'une pluralité de particules de verre que l'on peut cristalliser fondent ensemble.
